# EUROPEAN PATENT SPECIFICATION

(11) **EP 2 187 395 B1**
(45) Date of publication and mention of the grant of the patent: **24.08.2011**
(21) Application number: 08828078.9
(22) Date of filing: 26.08.2008
(51) Int. Cl.: G11B 7/244, B41M 5/26, G11B 7/004, G11B 7/24, G11B 7/0045

(54) **OPTICAL INFORMATION RECORDING MEDIUM**
AUFZEICHNUNGSMEDIUM FÜR OPTISCHE INFORMATIONEN
SUPPORT D'ENREGISTREMENT D'INFORMATIONS OPTIQUES

(30) Priority: 30.08.2007 JP 2007224626
(43) Date of publication of application: 19.05.2010
(73) Proprietor: Sony Corporation, Tokyo 108-0075 (JP)
(72) Inventor: UCHIYAMA, Hiroshi, Tokyo 108-0075 (JP); KUDO, Takao, Tokyo 108-0075 (JP); HAYASHIBE, Kazuya, Tokyo 108-0075 (JP); SUZUKI, Yusuke, Tokyo 108-0075 (JP); YAMATSU, Hisayuki, Tokyo 108-0075 (JP); TANABE, Norihiro, Tokyo 108-0075 (JP)
(74) Representative: Körber, Martin Hans
(86) International application number: PCT/JP2008/065628
(87) International publication number: WO 2009/028704

(56) References cited:
- JP-A- 10 222 871
- JP-A- 2002 197 719
- JP-A- 2006 182 029
- JP-A- 2006 190 347
- JP-A- 2007 026 629
- US-A- 4 300 227
- US-A1- 2004 233 824
- US-A1- 2006 182 924

## Description

### Technical Field

The present invention relates to an optical information recording medium and a recording method, and is preferably applied to, for example, an optical information recording medium on which information is recorded by an optical beam and from which the information is reproduced by an optical beam.

### Background Art

As an optical information recording medium, a discoid optical disc, such as CD (Compact Disc), DVD (Digital Versatile Disc), and Blu-ray Disc (Registered Trademark: referred to as "BD", hereinafter), has been popular.

On the other hand, an optical disc device that supports such an optical disc is designed to record on the optical disc various kinds of information, such as various kinds of content including music content and video content, and various kinds of data including data for computers. Especially in recent years, an amount of information is increasing due to improvements in graphic resolution and sound quality, and there is a demand for an optical disc that can store more pieces of content. Accordingly, there is a demand for an optical disc with large capacity.

Such an optical disc as CD-R (Recordable), DVD-R and DVD+R includes a pigment layer adjacent to a signal recording layer. After the pigment layer of the optical disc is exposed to the converged optical beam, a pigment of the pigment layer dissolves and evaporates due to heat of the optical beam. In this optical disc, a gas produced from a portion exposed to the optical beam deforms the signal recording layer adjacent to the pigment layer, creating a cavity. Accordingly, a recording mark is recorded. Moreover, most recently, on another types of optical disc, a recording mark is formed thanks to primarily the change in refractive index on the pigment layer after a chemical reaction is induced by the converged light.

Not only does a reflection layer of this optical disc reflect the optical beam, but its pigment layer also absorbs the optical beam. This leads to a decrease in light transmission of the whole optical disc. This makes it difficult to produce an optical disc with 4 layers or more and to increase its capacity.

Accordingly, one of the methods to increase the capacity of the optical disc is proposed: the interference of two optical beams produces microscopic holograms on layers that pile up in the direction of the thickness of the optical disc; as a result, an optical information recording medium contains a plurality of layers inside one recording layer for recording information (see Patent Document 1, for example).
Patent Document 1: Jpn. Pat. Laid-open Publication No. 2006-78834 (Fig. 1)

However, since the rotating optical disc vibrates, an optical disc device that uses the above optical disc may need an advanced control system to focus the two optical beams on a focal point where information will be recorded. But this complicates the structure, thereby making it difficult to ensure the stable reproducing or recording of information.

JP 2006 190347 A discloses an optical disk 10 with a recording resin layer 3, which is constituted so that its evaporation temperature is lower than the melting points of a transparent protective layer 2 and a light absorbing layer 4, which are provided on both sides of the resin layer 3. An optical beam 7 can be condensed onto the resin layer 3, in order to form a cavity region 8 as a recording mark.

### Disclosure of the Invention

The present invention has been made in view of the above points and is intended to provide an optical information recording medium that can record or reproduce information in a stable manner with a simple configuration.

To solve the above problem, the present invention offers a recording layer including a photopolymer and a photoinitiator, whose vaporization temperature is greater than or equal to 140 deg C and less than or equal to 400 deg C, wherein the recording layer (101) is adapted, so that when a predetermined recording beam (L2c) is converged on it at a time of recording information, a recording mark which is a cavity is formed by the vaporization of the photoinitiator caused by an increase in temperature around a focal point of the recording beam, and wherein the recording layer is adapted so as to allow the information to be reproduced based on a returning beam generated after the emission of a predetermined reading beam that is emitted for reproducing the information.

Accordingly, just focusing the recording beam creates the recording mark around the focal point of the recording beam.

According to the present invention, just focusing the recording beam creates the recording mark around the focal point of the recording beam. Therefore, an optical information recording medium that can record or reproduce information in a stable manner with a simple configuration can be realized.

### Brief Description of the Drawings

Fig. 1 is a schematic diagram illustrating the configuration of (A) a perspective view, (B) a top view, and (C) a cross-sectional view of an optical information recording medium.
Fig. 2 is a schematic diagram illustrating the initialization of an optical information recording medium.
Fig. 3 is a schematic diagram schematically illustrating the presence of photoinitiator residues.
Fig. 4 is a schematic diagram illustrating the emission of a recording optical beam.
Fig. 5 is a schematic diagram illustrating the measurement of vaporization temperatures (1).
Fig. 6 is a schematic diagram illustrating the measurement of vaporization temperatures (2).
Fig. 7 is a schematic diagram illustrating the measurement of vaporization temperatures (3).
Fig. 8 is a schematic diagram illustrating the configuration of an optical information recording and reproducing device.
Fig. 9 is a schematic diagram illustrating the recording (A) and reproducing (B) of information.
Fig. 10 is a schematic diagram illustrating the detection of a returning optical beam (Sample 1).
Fig. 11 is a schematic diagram illustrating the detection of a returning optical beam (Sample 2).
Fig. 12 is a schematic diagram illustrating the detection of a returning optical beam (Sample 3).
Fig. 13 is a schematic diagram illustrating the detection of a returning optical beam (Sample 4).
Fig. 14 is a schematic diagram illustrating (A) a horizontal direction and (B) a vertical direction of the signal strength distribution of a returning optical beam.
Fig. 15 is a photograph depicting the cross-section of a recording mark.
Fig. 16 is a schematic diagram illustrating the signal strength distribution of a returning optical beam coming from (A) the second layer and (B) the fifth layer.
Fig 17 is a schematic diagram illustrating the signal strength distribution of a returning optical beam coming from (A) the eighth layer and (B) the eleventh layer.

### Best Mode for Carrying-Out of the Invention

An embodiment of the present invention will be described in detail with reference to the accompanying drawings.

### (1) Configuration of Optical Information Recording Medium

### (1-1) Overall Configuration of Optical Information Recording Medium

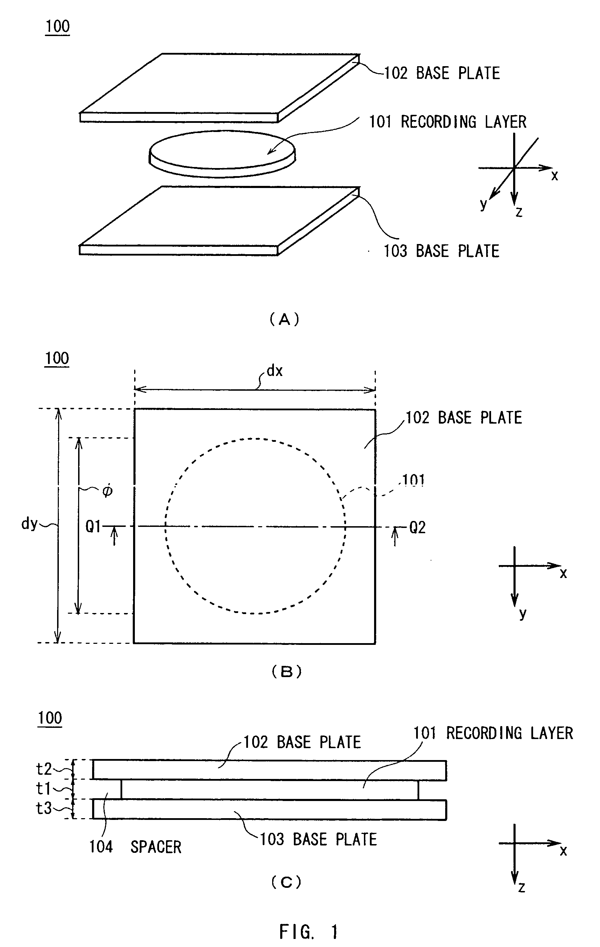

As shown in Figs. 1A to 1C, an optical information recording medium 100 includes a base plate 102 and a base plate 103. Between the base plates 102 and 103, a recording layer 101 is formed. Accordingly, the optical information recording medium 100, as a whole, works as a photopolymer medium.

The base plates 102 and 103 are glass substrates. The base plates 102 and 103 have high light transmittance. The base plates 102 and 103 are square or rectangular in shape: the lengths dx and dy of the base plates 102 and 103 in x and y directions are about 50 [mm] while the thickness t2 and the thickness t3 are about between 0.6 and 1.1 [mm].

AntiReflection coating (AR) treatment is applied to the outer surfaces of the base plates 102 and 103 (those surfaces does not touch the recording layer 101): the coating contains four-layer anorganic substances (Nb₂O₂/SiO₂/Nb₂O₅/SiO₂) that does not reflect an optical beam whose wavelength is 405 nm.

By the way, the base plates 102 and 103 can be made from various optical materials other than glass plates: acrylate resin, polycarbonate resin, or the like. The thickness t2 and t3 of the base plates 102 and 103 are not limited to the above value: they may be arbitrarily selected between 0.05 [mm] to 1.2 [mm]. The thickness t2 may be the same as or different from the thickness t3. Moreover, AR coating may not be applied to the outer surfaces of the base plates 102 and 103.

And an uncured fluid material M1 is spread on the base plate 103: photopolymer will be formed from the fluid material M1 by photo polymerization (described later in detail). After that, the base plate 102 is put on the fluid material M1. As a result, the optical information recording medium 100 (referred to as "uncured optical information recording medium 100a," hereinafter) is formed: its portion corresponding to the recording layer 101 is the uncured fluid material M1.

In this manner, the uncured optical information recording medium 100a, as a whole, is a thin plate: the fluid material M1, or uncured photopolymer, is sandwiched between the transparent base plates 102 and 103.

In the fluid material M1, monomer, oligomer, or both of them (collectively referred to as "monomers," hereinafter) are evenly spread. If the fluid material M1 is exposed to light, the light-exposed monomers are polymerized (i.e. photopolymerized) to form photopolymer, changing its reflectance and refractive index. Moreover, in the fluid material M1, the reflectance and refractive index may change due to photocrosslinking: photocrosslinking is a bridge that links one photopolymer to another and is caused by right irradiation, resulting in a increase of the molecular mass.

In fact, part or most of the fluid material M1 contains photopolymerization-type and photocrosslinking-type resin. The photopolymerization-type and photocrosslinking-type resin for example includes radical polymerization-type monomers and radical generation-type photoinitiators, or includes cationic polymerization-type monomers and cationic generation-type photoinitiators.

Incidentally, those monomers may be the publicly known monomers: for example, as radical polymerization-type monomers, there are acrylic acid, acryl ester, derivatives of acrylic acid amides, derivatives of styrene and vinylnaphthalene, and other monomers used for radical polymerization. Moreover, a compound including acrylic monomer with the structure of urethane can be also applied. Furthermore, a derivative whose hydrogen atoms are replaced by halogen atoms can be used as the above-noted monomers.

Specifically, for example, the radical polymerization-type monomers are the publically known compounds, such as acryloyl morpholine, phenoxy ethyl acrylate, isobornyl acrylate, 2-hydroxy propyl acrylate, 2-ethyl hexyl acrylate, 1,6-hexane diol diacrylate, tripropylene glycol diacrylate, neopentyl glycol PO-modified diacrylate, 1,9-nonanediol diacrylate, hydroxypivalate neopentyl glycol diacrylate. Incidentally, they may be monofunctional or multifunctional.

Moreover, the cationic polymerization-type monomers may be the publicly known compounds including epoxy or vinyl groups to generate cation: for example, there are epoxycyclohexylmethyl acrylate, epoxycyclohexylmethyl acrylate, glycidyl acrylate, vinyl ether, and oxetane.

The radical generation-type photoinitiators may be the publicly-known compounds: for example, there are 2,2-dimethoxy-1,2-diphenylethan-1-one (IRGACURE (Registered Trademark: referred to as "Irg-," hereinafter) 651, Ciba Specialty Chemicals), 1-[4-(2-hydroxyethoxy)-phenyl]-2-hidoroxy-2-methyl-1-propan-oneone (Irg-2959, Ciba Specialty Chemicals), bis(2,9,6-trimethylbenzoyl)-phenylphosphineoxideone (Irg-819, Ciba Specialty Chemicals).

The cationic generation-type photoinitiators may be the publicly-known compounds: for example, there are diphenyliodonium hexafluorophosphate, tri-p-trisulphonium hexafluorophosphate, cumyltrile iodonium hexafluorophosphate, cumyltrile iodonium tetrakis (pentafluorophenyl) boron.

Incidentally, by using the cationic polymerization-type monomers and the cationic generation-type photoinitiators, the degree of cure shrinkage of the fluid material M1 can be reduced, compared with when the radical polymerization-type monomers and the radical generation-type photoinitiators are used. Moreover, anionic-type monomers and photoinitiators may be used in combination as photopolymerization-type and photocrosslinking-type resin.

Moreover, materials are appropriately selected for photopolymerization-type monomers, photocrosslinking-type monomers, and photoinitiators: especially, materials of the photoinitiators are appropriately selected. This allows photopolymerization to occur at a desired wavelength. Incidentally, the fluid material M1 may include appropriate amounts of additive agents, such as a polymerization inhibitor, which prevents the fluid material M1 from reacting to unplanned beams, a polymerization promoter, which promotes polymerization.

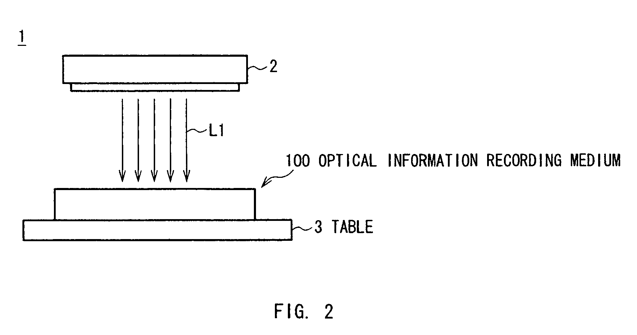

And, as shown in Fig. 2, an initialization device 1 emits a initialization beam L1 from an initialization beam source 2 to initialize the fluid material M1 of the uncured optical information recording medium 100a. As a result, the fluid material M1 serves as the recording layer 101 on which a recording mark is recorded.

Specifically, the initialization beam source 2 of the initialization device 1 emits the initialization beam L1 whose wavelength is for example 365 [nm] (250 or 300 [mW/cm2], for example) to the flat optical information recording medium 100 put on a table 3. The wavelength and intensity of the initialization beam L1 are selected appropriately according to the type of the photoinitiator used in the fluid material M1 and the thickness t1 of the recording layer 101.

Incidentally, the initialization beam source 2 may be a high power beam source, such as a high-pressure mercury-vapor lamp, a high-pressure metal halide lamp, a solid laser and a semiconductor laser.

Moreover, the initialization beam source 2 includes a driving section (not shown) that moves in X and Y directions (right and frontward directions in diagrams, respectively). Accordingly, the initialization beam source 2 evenly emits the initialization beam L1 to the uncured optical information recording medium 100a from an appropriate position. Therefore, the whole area of the uncured optical information recording medium 100a is evenly exposed to the initialization beam L1.

At this time, the fluid material M1 generates radicals and cations from the photoinitiators in the fluid material M1 to start a photopolymerization reaction, a photocrosslinking reaction, or both of them (collectively referred to as optical reaction") regarding the monomers. In step with these reactions, a photocrosslinking reaction of the monomers also occurs like a chain reaction. As a result, the monomers are polymerized and become photopolymer. In this manner, the monomers get rigid and can serve as the recording layer 101.

Incidentally, the optical reactions happen evenly on the fluid material M1. Accordingly, any portion of the hardened recording layer 101 has the same refractive index. This means that information is not recorded on the initialized optical information recording medium 100 because the amount of light reflected at any point of the optical information recording medium 100 is the same.

### (1-2) Basic Concept for Recording and Reproducing of Recording Marks

As described above, the photoinitiator of the fluid material M1 serves as a starter and sets off a chain reaction of the optical reactions. Accordingly, a very small amount of the photoinitiator is consumed in theory. However, in order to promptly and sufficiently promote the optical reactions of the fluid material M1, in general, an excessive amount of the photoinitiator is used, compared with the amount of the photoinitiator actually consumed.

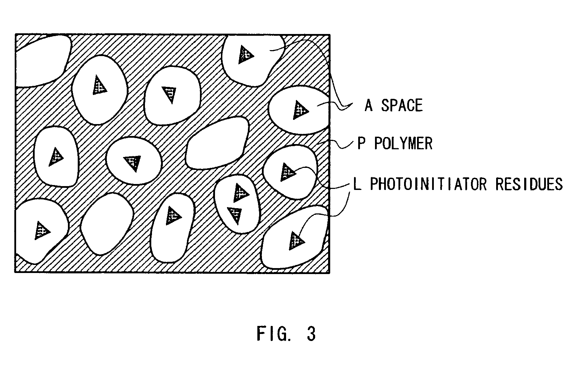

Accordingly, as shown in Fig. 3, the recording layer 101 of the initialized optical information recording medium 100 is in condition in which remaining photoinitiators (referred to as "photoinitiator residues," hereinafter) L are scattered inside spaces A formed in a polymer P generated by polymerization of the monomers.

As for the optical information recording medium 100 of the present invention, a photoinitiator whose vaporization temperature, at which it vaporizes due to boiling or decomposition, is between 140 and 400 deg C ("between 140 and 400 degrees" and "140 to 400 degrees" mean "greater than or equal to 140 and less than or equal to 400 degrees": "between" and "to" are used in the same way, hereinafter) is added to the fluid material M1. In this manner, the initialized recording layer 101 leaves the photoinitiator residues whose vaporization temperatures are between 140 and 400 deg C scattered.

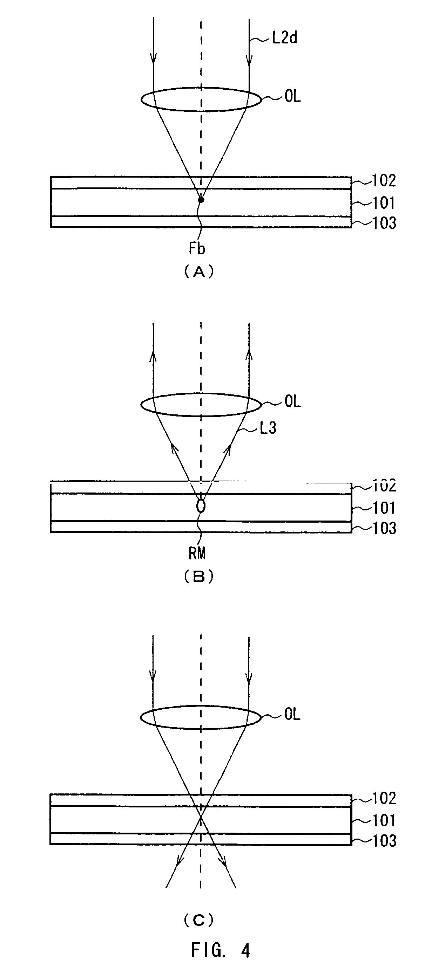

As shown in Fig. 4, when a predetermined recording optical beam L2 (referred to as "recording optical beam L2c," hereinafter) is emitted to the recording layer 101 via an objective lens OL, the portion around a focal point Fb of the recording optical beam L2c heats up locally, for example, at 150 deg C or higher.

At this time, the recording optical beam L2c vaporizes the photoinitiator residues around the focal point Fb, increasing its volume. As a result, an air bubble is formed at the focal point Fb. At this time, the vaporized photoinitiator residues just pass through the inner part of the recording layer 101, and are cooled down after the emission of the recording optical beam L2c is stopped, becoming a small volume of fluid. Accordingly, only the air bubble, or a cavity, is left around the focal point Fb. Incidentally, resins like the one used for the recording layer 101 usually allows air to pass therethrough at a constant speed; therefore, the cavity is expected to be finally filled with air.

In this manner, in the optical information recording medium 100, the photoinitiator residues are vaporized by emission of the recording optical beam L2c. Accordingly, as shown in Fig. 4A, the air bubble, or the cavity, is formed at the focal point Fb as a recording mark RM.

Generally, a refractive index n₁₀₁ of the photopolymer that is used for the recording layer 101 is approximately 1.5, while a refractive index n_{AIR} of the air is 1.0. Accordingly, when a reading optical beam L2d is emitted to the recording mark RM on the recording layer 101, the reading optical beam L2d is reflected due to the difference in refractive index between both sides of the boundary of the recording mark RM, generating the relatively strong intensity of a returning optical beam L3, as shown in Fig. 4B.

On the other hand, in the recording layer 101, if a reading optical beam L2 (referred to as "reading optical beam L2d," hereinafter) is emitted to a predetermined target position where there is no recording mark RM as shown in Fig. 4C, the reading optical beam L2d is not reflected because the area around the target position has the same refractive index n₁₀₁.

Accordingly, as for the optical information recording medium 100, the reading optical beam L2d is emitted to a target position on the recording layer 101, and the intensity of the returning optical beam L3, which is the reflection from the optical information recording medium 100, is detected to determine whether the recording mark RM exists or not on the recording layer 101. As a result, the information recorded on the recording layer 101 is reproduced.

### (1-3) Specific Configuration of Recording Layer

Under the following conditions, Samples 1 to 20 are produced as the optical information recording medium 100.

### (1-3-1) Sample 1

The fluid material M1 is produced by adding 0.8 part by weight of IRGACUR (Registered Trademark: referred to as "Irg-," hereinafter) 784 (Bis (η-2,4-cyclopentadien-1-yl)-Bis (2,6-difluoro-3-1H-pyrrol-1-yl)-phenyl) titanium (Ciba Specialty Chemicals)) as photoinitiator per 100 parts by weight of a mixture of an acrylic acid ester monomer (acryl ester of p-cumylphenol ethyleneoxide adducts) and an urethane bifunctional acrylate oligomer (weight ratio: 40:60) as monomers, and mixing and defoaming them under a dark room.

The uncured optical information recording medium 100a is produced by sandwiching the fluid material M1 in between the base plates 102 and 103 after the fluid material M1 is spread over the base plate 103. After that, to the uncured optical information recording medium 100a, a initialization beam source 1, which is a high-pressure mercury-vapor lamp, emits the initialization beam L1 (whose power density is 250 [mW/cm²] when the wavelength is 365 [nm]) for 10 [sec], thereby producing Sample 1 as the optical information recording medium 100. Incidentally, the thickness t1 of the recording layer 101 is 0.5 [mm], the thickness t2 of the base plate 102 is 0.7 [mm], and the thickness t3 of the base plate 103 is 0.7 [mm].

### (1-3-2) Sample 2

The fluid material M1 is produced by adding 1.0 part by weight of photoinitiator Irg-784 per 100 parts by weight of ultraviolet curable resin 06A32X-5 (Sony Chemical & Information Device Corporation), which is a type of monomer, and mixing and defoaming them under a dark room.

The uncured optical information recording medium 100a is produced in the same way as Sample 1. The initialization beam L1 (whose power density is 300 [mW/cm²] when the wavelength is 365 [nm]) is emitted for 20 [sec], thereby producing Sample 2 as the optical information recording medium 100. Incidentally, the thickness t1 of the recording layer 101 is 1.0 [mm], the thickness t2 of the base plate 102 is 1.1 [mm], and the thickness t3 of the base plate 103 is 0.6 [mm].

### (1-3-3) Sample 3

The fluid material M1 is produced by adding 0.3 parts by weight of curing agent CX-32-2480 (Shin-Etsu Chemical Co., Ltd.) per 100 parts by weight of silicon resin X-32-2480 (Shin-Etsu Chemical Co., Ltd.), which is a type of thermosetting resin, and mixing and defoaming them under a dark room.

The uncured optical information recording medium 100a is produced in the same way as Sample 1. The uncured optical information recording medium 100a is heated to a temperature of 100 deg C for 1 [hr], and further to a temperature of 150 deg C for 5 [hr], thereby producing Sample 3 as the optical information recording medium 100. Incidentally, in Sample 3, the thickness t1 of the recording layer 101 is 0.3 [mm], the thickness t2 of the base plate 102 is 1.1 [mm], and the thickness t3 of the base plate 103 is 1.1 [mm].

### (1-3-4) Samples 4 and 5

Although Irg-184 (1-Hydroxy-cyclohexyl-phenyl-ketone, Ciba Specialty Chemicals) is used instead of Irg-784, the procedure of producing the fluid material M1 is almost the same as Sample 1. And Samples 4 and 5 are produced as the optical information recording medium 100 in the same way as Sample 2.

Incidentally, in Sample 4, the thickness t1 of the recording layer 101 is 0.3 [mm], the thickness t2 of the base plate 102 is 1.1 [mm], and the thickness t3 of the base plate 103 is 1.1 [mm]. Moreover, in Sample 5, the thickness t1 of the recording layer 101 is 0.05 [mm], the thickness t2 of the base plate 102 is 1.1 [mm], and the thickness t3 of the base plate 103 is 1.1 [mm].

### (1-3-5) Sample 6

Although DAROCUR (Registered Trademark) 1173 (2-Hydroxy-2-methyl-1-phenyl-propan-1-one, Ciba Specialty Chemicals) is used instead of Irg-784, the procedure of producing the fluid material M1 is almost the same as Sample 1. And Sample 6 is produced as the optical information recording medium 100 in the same way as Sample 2. Incidentally, in Sample 6, the thickness t1 of the recording layer 101 is 0.3 [mm], the thickness t2 of the base plate 102 is 1.1 [mm], and the thickness t3 of the base plate 103 is 1.1 [mm].

### (1-3-6) Sample 7

Although Irg-907 (2-Methyl-1-[4-(methylthio)phenyl]-2-morpholinyl propanone-one, Ciba Specialty Chemicals) is used instead of Irg-784, the procedure of producing the fluid material M1 is almost the same as Sample 1. And Sample 7 is produced as the optical information recording medium 100 in the same way as Sample 2. Incidentally, in Sample 7, the thickness t1 of the recording layer 101 is 0.3 [mm], the thickness t2 of the base plate 102 is 1.1 [mm], and the thickness t3 of the base plate 103 is 1.1 [mm].

The following is a list showing how much monomers and photoinitiators are blended for the fluid material M1 of each Sample 1 to 7.

**Table 1**

| | Sample | 1 | 2 | 3 | 4 | 5 | 6 | 7 |
|---|---|---|---|---|---|---|---|---|
| Monomer | acrylic acid ester monomer | 40 | - | - | 40 | 40 | 40 | 40 |
| | urethane bifunctional acrylate oligomer | 60 | - | - | 60 | 60 | 60 | 60 |
| | 06A32X-5 | - | 100 | - | - | - | - | - |
| | X-32-2480 | - | - | 100 | - | - | - | - |
| Photoinitiator | Irg-784 | 0.8 | 1.0 | - | - | - | - | - |
| | Irg-184 | - | - | - | 0.8 | 0.8 | - | - |
| | DAROCUR1173 | - | - | - | - | - | 0.8 | - |
| | Irg-907 | - | - | - | - | - | - | 0.8 |
| Curing agent | CX-32-2480 | - | - | 0.3 | - | - | - | - |

Incidentally, in Samples 2 to 7, the total thickness of the base plate 102 and the recording layer 101 (t2 + t1) to which the recording optical beam L2c is emitted exceeds 1.0 [mm] due to reasons related to experiments, but it should preferably be 1.0 [mm] or less. If it exceeds 1.0 [mm], the amount of astigmatism related to the recording optical beam Lc2 increases in the optical information recording medium 100 when the surface of the optical information recording medium 100 tilts over.

### (1-3-7) Samples 8 to 15

In Samples 8 to 15, equivalent amount of nine types of photoinitiators, each of which has a different vaporization temperature, are added to one type of monomer. This makes it possible to confirm the effect of the difference in vaporization temperature of the photoinitiators.

The fluid material M1 is produced by adding 1.0 part by weight of a photoinitiator per 100 parts by weight of a mixture of an acrylic acid ester monomer (acryl ester of p-cumylphenol ethyleneoxide adducts) and an urethane bifunctional acrylate oligomer (weight ratio: 40:60) as monomers, and mixing and defoaming them under a dark room. The following shows photoinitiators used for each Sample.
Sample 8: DAROCUR1173
Sample 9: Irg-184
Sample 10: Irg-784
Sample 11: Irg-907
Sample 12: Irg-369 (2-Benzyl-2-dimethylamino-1-(4-morpholinyl)-butanone-1, Ciba Specialty Chemicals)
Sample 13: SCTP (Sony Chemical & Information Device Corporation)
Sample 14: X-32-24 (Sony Chemical & Information Device Corporation)
Sample 15: UVX4 (Sony Chemical & Information Device Corporation)

And in the same way as Sample 1, the uncured optical information recording medium 100a is produced. After that, the initialization beam L1 (whose power density is 250 [mW/cm²] when the wavelength is 365 [nm]) is emitted for 10 [sec], thereby producing Samples 8 to 15 as the optical information recording medium 100. Incidentally, in Samples 8 to 15, the thickness t1 of the recording layer 101 is 0.5 [mm], the thickness t2 of the base plate 102 is 0.7 [mm], and the thickness t3 of the base plate 103 is 0.7 [mm].

The following is a list showing how much monomers and photoinitiators are blended for the fluid material M1 of each Sample 8 to 15.

**Table 2**

| | Sample | 8 | 9 | 10 | 11 | 12 | 13 | 14 | 15 |
|---|---|---|---|---|---|---|---|---|---|
| Monomer | acrylic acid ester monomer | 40 | 40 | 40 | 40 | 40 | 40 | 40 | 40 |
| | urethane bifunctional acrylate oligomer | 60 | 60 | 60 | 60 | 60 | 60 | 60 | 60 |
| Photoinitiator | Irg-784 | - | - | 1 | - | - | - | - | - |
| | Irg-184 | - | 1 | - | - | - | - | - | - |
| | DAROCUR1173 | 1 | - | - | 1 | - | - | - | - |
| | Irg-907 | - | - | - | - | 1 | - | - | - |
| | Irg-369 | - | - | - | - | - | - | - | - |
| | SCTP | - | - | - | - | - | 1 | - | - |
| | X-32-24 | - | - | - | - | - | - | 1 | - |
| | UVX4 | - | - | - | - | - | - | - | 1 |

### (1-3-8) Samples 16 to 20

In Sample 16 to 20, one type of a photoinitiator is added to one type of monomer with changing its added amount. This makes it possible to confirm the effect of the difference in amount of the photoinitiator.

The fluid material M1 is produced by adding a certain amount of photoinitiator DAROCUR1173 per 100 parts by weight of a mixture of an acrylic acid ester monomer (acryl ester of p-cumylphenol ethyleneoxide adducts) and an urethane bifunctional acrylate oligomer (weight ratio: 40:60), and mixing and defoaming them under a dark room. The following shows how much of DAROCUR1173 is added to each Sample.
Sample 16: 2.5 parts by weight
Sample 17: 5.0 parts by weight
Sample 18: 10.0 parts by weight
Sample 19: 20.0 parts by weight
Sample 20: 25.0 parts by weight

And in the same way as Sample 1, the uncured optical information recording medium 100a is produced. After that, the initialization beam L1 (whose power density is 250 [mW/cm²] when the wavelength is 365 [nm]) is emitted for 10 [sec], thereby producing Samples 16 to 20 as the optical information recording medium 100. Incidentally, in Samples 16 to 20, the thickness t1 of the recording layer 101 is 0.5 [mm], the thickness t2 of the base plate 102 is 0.7 [mm], and the thickness t3 of the base plate 103 is 0.7 [mm].

The following is a list showing how much monomers and photoinitiators are blended for the fluid material M1 of each Sample 16 to 20.

**Table 3**

| | Sample | 16 | 17 | 18 | 19 | 20 |
|---|---|---|---|---|---|---|
| Monomer | acrylic acid ester monomer | 40 | 40 | 40 | 40 | 40 |
| | urethane bifunctional acrylate oligomer | 60 | 60 | 60 | 60 | 60 |
| Photoinitiator | DAROCUR1173 | 2.5 | 5 | 10 | 20 | 25 |

### (1-4) Measurement of Photoinitiators' Vaporization Temperatures

The vaporization temperatures of the photoinitiators used for Samples 1 to 20 (except Sample 3's curing agent) have been measured by TG/DTA (simultaneous thermogravimetry-differential thermal analysis) under the following condition:
Ambient atmosphere: N₂ (under a nitrogen atmosphere)
Rate of temperature increase: 20 deg C per minute
Measured temperature: between 40 and 600 deg C
Measured with: TG/DTA300 (Seiko Instruments Inc.)

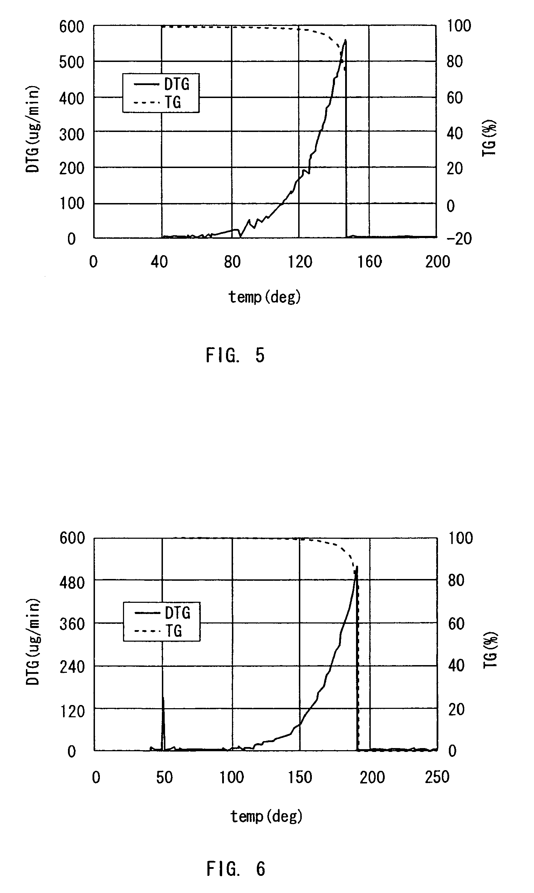

Fig. 5 shows the result of measurement of DAROCUR1173 used for Samples 6, 8, 11 and Samples 16 to 20. According to DTG curving line indicating endothermic and exothermic reactions (indicated by a solid line), an endothermic reaction gradually started around 90 deg C, and became vigorous around 120 deg C.

Moreover, TG curved line (indicated by a broken line) indicating weight change shows that weight loss occurred rapidly around 120 deg C, vaporizing most of measurement-target DAROCUR1173 at approximately 147 deg C. A temperature of 147 deg C, at which weight loss peaked, is therefore regarded as the vaporization temperature of DAROCUR1173.

Fig. 6 shows the result of measurement of Irg-184 used for Samples 4, 5, and 9. According to DTG curving line, an endothermic reaction gradually started around 140 deg C, and became vigorous around 170 deg C.

Moreover, TG curved line (indicated by a broken line) shows that weight loss occurred rapidly around 170 deg C, vaporizing most of measurement-target Irg-184 at approximately 192 deg C. A temperature of 192 deg C, at which weight loss peaked, is therefore regarded as the vaporization temperature of Irg-184.

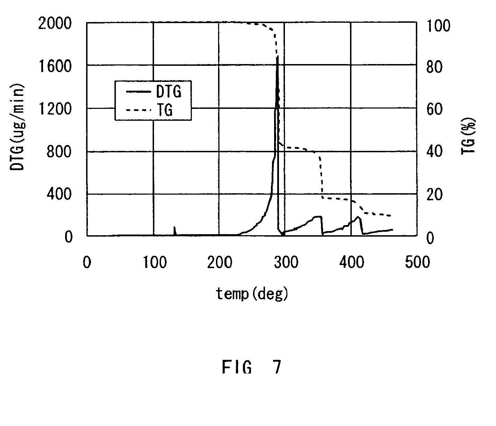

Incidentally, the measurement of other photoinitiators' vaporization temperatures was conducted in a similar manner (not shown). By the way, as shown in Fig. 7, if a measurement target has a plurality of vaporization temperatures, the lowest one at which weight plunges (289 deg C in the case of Fig. 7) is regarded as the measurement target's vaporization temperature.

Table 4 below shows the measured vaporization temperatures of photoinitiators. By the way, it shows that the vaporization temperature of UVX4 is more than 600 deg C. This is because rapid weight loss was not confirmed and the vaporization temperature was not in the measurement range (40 to 600 deg C)

**Table 4**

| Photoinitiator | Vaporization Temperature (deg C) |
|---|---|
| Irg-784 | 232 |
| Irg-184 | 192 |
| DAROCUR1173 | 147 |
| Irg-907 | 247 |
| Irg-369 | 282 |
| SCTP | 394 |
| X-32-24 | 532 |
| UVX4 | >600 |

### (2) Configuration of Optical Information Recording/Reproducing Device

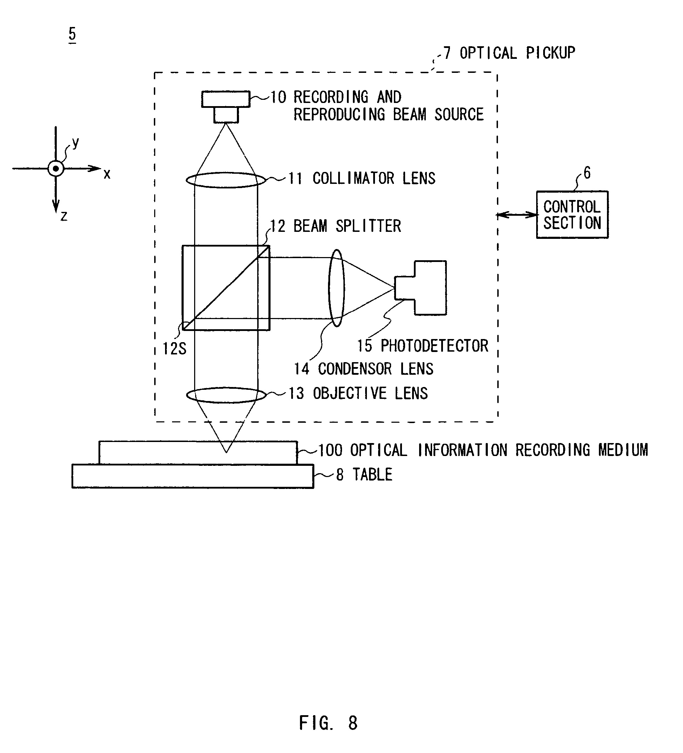

With reference to Fig. 8, an optical information recording and reproducing device 1, as a whole, is designed to emit a beam to the optical information recording medium 100 to record information, and to reproduce the information.

An optical information recording and reproducing device 5 includes a control section 6, which includes CPU (Central Processing Unit), to take overall control of the device. The control section 6 reads out from ROM (Read Only Memory: not shown) various programs, including a basic program, an information recording program, and an information reproducing program, and loads them onto RAM (Random Access Memory: not shown). In this manner, the control section 6 performs various processes, such as an information recording process and an information reproducing process.

The control section 6 controls an optical pickup 7 to emit a beam from the optical pickup 7 to the optical information recording medium 100, and to receive the reflection from the optical information recording medium 100.

Under the control of the control section 6, the optical pickup 7 emits from a recording and reproducing beam source 10 (which is a laser diode) an optical beam L2 whose wavelength is for example 405 [nm]. After a collimator lens 11 collimates the diverging optical beam L2, the optical pickup 7 lets it enter a beam splitter 12.

Incidentally, under the control of the control section 6, the recording and reproducing beam source 10 can adjust the intensity of the optical beam L2.

The beam splitter 12 allows part of the optical beam L2 to pass through a reflection and transmission plane 12S, and lets it enter an objective lens 13. The objective lens 13 converges the optical beam L2, and then focuses it on a point inside the optical information recording medium 100.

Moreover, when receiving a returning optical beam L3 from the optical information recording medium 100, the objective lens 13 collimates the returning optical beam L3, and lets it enter the beam splitter 12. At this time, the reflection and transmission plane 12S of the beam splitter 12 reflects part of the returning optical beam L3, and lets it enter a condenser lens 14.

The condenser lens 14 converges the returning optical beam L3 and focuses it on a light-receiving surface of a photodetector 15. Accordingly, the photodetector 15 detects the intensity of the returning optical beam L3, generates a detection signal according to the detected intensity, and transmits the detection signal to the control section 6. Therefore, the control section 6 can recognize the detection state of the returning optical beam L3 based on the detection signal.

By the way, the optical pickup 7 is equipped with a driving section (not shown). Under the control of the control section 6, the driving section can move in three-axis directions, or in X, Y and Z directions with freedom. In reality, by controlling the position of the optical pickup 7, the control section 6 places the focal point of the optical beam L2 at a desired position.

In that manner, the optical information recording and reproducing device 5 focuses the optical beam L2 on an arbitrary position inside the optical information recording medium 100, and detects the returning optical beam L3 coming from the optical information recording medium 100.

### (3) Information Recording and Reproducing

### (3-1) Receiving of Returning Optical Beam

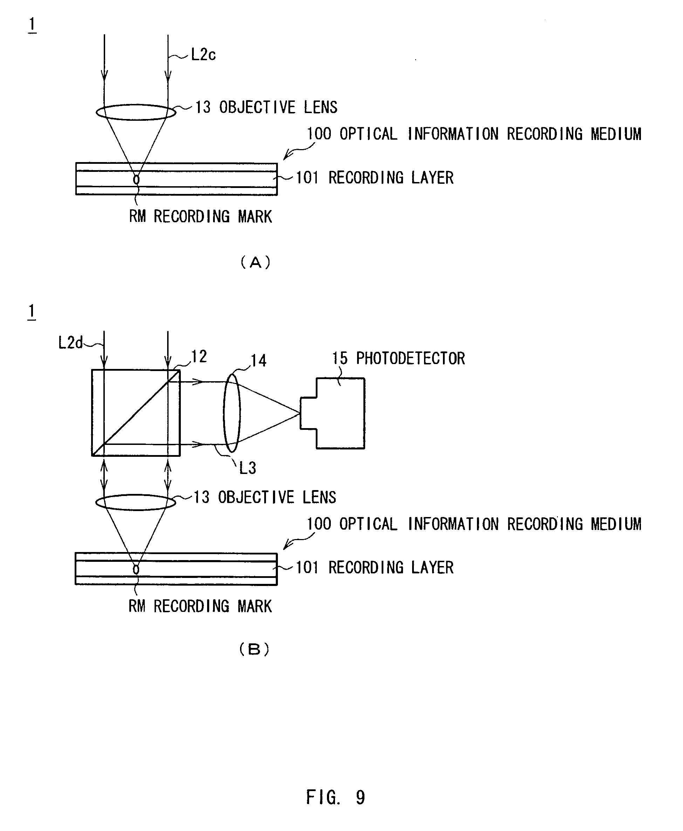

As shown in Fig. 9(A), when recording information on the optical information recording medium 100, the optical information recording and reproducing device 5 focuses the recording optical beam L2c emitted from the recording and reproducing beam source 10 (Fig. 8) on a point inside the recording layer 101. In this case, by controlling the position of the optical pickup 7 (Fig. 8) in X, Y, and Z directions, the optical information recording and reproducing device 5 focuses the recording optical beam L2c (Fig. 9(A)) on a target position inside the recording layer 101.

At this time, the recording optical beam L2c is converged at the target position inside the recording layer 101, and temperatures around it rise locally. As a result, the temperature of the photoinitiator residues on the recording layer 101 is equal to or higher than the vaporization temperature of the photoinitiator, vaporizing the photoinitiator residues and forming a cavity, or a recording mark RM, at the target position in the recording layer 101.

Specifically, the optical information recording and reproducing device 5 sets the target position at a depth of 25 to 200 [µm] from the surface of the recording layer 101; the recording optical beam L2c, which is laser light with the wavelength of 402 to 406 [nm] and the optical power of 20 or 55 [mW] is emitted from the recording and reproducing beam source 10, condensed by the objective lens 13 whose Numerical Aperture (NA) is 0.3 or 0.35, and projected to the target position.

As shown in Fig. 9(B), when reading out information from the optical information recording medium 100, the optical information recording and reproducing device 5 focuses the reading optical beam L2d emitted from the recording and reproducing beam source 10 (Fig. 8) on a point inside the recording layer 101. In this case, by controlling the position of the optical pickup 7 (Fig. 8) in X, Y, and Z directions, the optical information recording and reproducing device 5 focuses the reading optical beam L2d (Fig. 9(B)) on the target position inside the recording layer 101.

At this time, the recording and reproducing beam source 10 of the optical information recording and reproducing device 5 emits the reading optical beam L2d whose wavelength is the same as that of the recording optical beam L2c and whose optical power is 200 [µW] or 1.0 [mW]; the objective lens 13 focuses the reading optical beam L2d on the target position where the recording mark RM should have been formed inside the recording layer 101.

At this time, the reading optical beam L2d is reflected by the recording mark RM, thereby becoming the returning optical beam L3. The photodetector 15 (CCD (Charge Coupled Device)) of the optical information recording and reproducing device 5 detects the returning optical beam L3 which has traveled through the objective lens 13, the beam splitter 12, and the like.

Specifically, the optical information recording and reproducing device 5 emitted the recording optical beam Lc2 with the wavelength of 402 [nm] and optical power of 20 [mW] to the Sample 1's target position via the objective lens 13 whose numerical aperture NA is 0.35 for 1 [sec]. After that, the optical information recording and reproducing device 5 emitted the reading optical beam L2d with the same wavelength and the optical power of 200 [µW] to the Sample 1's target position via the objective lens 13 having the same numerical aperture NA.

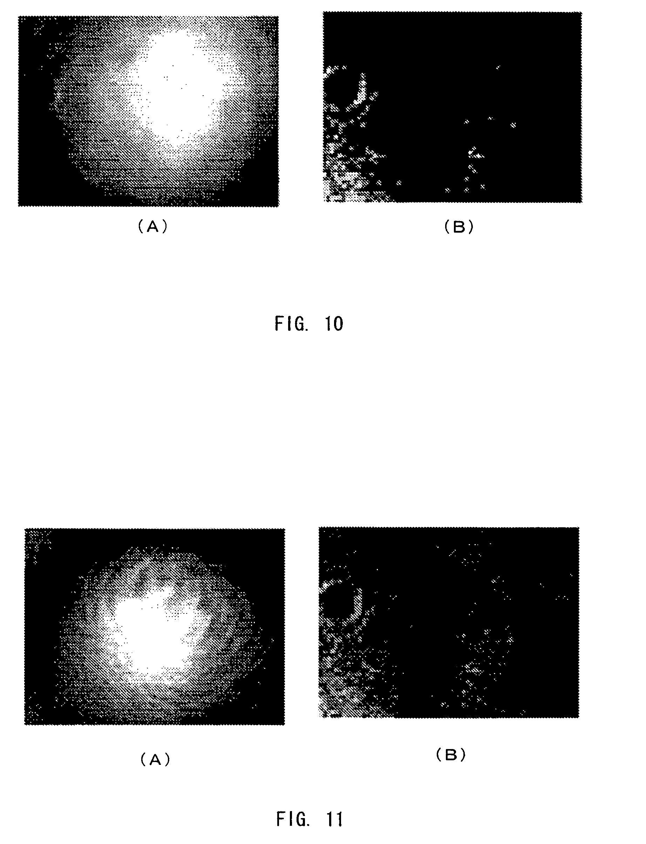

At this time, as shown in Fig. 10(A), the photodetector 15 could detect the returning optical beam L3 because its intensity was strong enough. Incidentally, in Fig. 10, the white portions represent the strong intensity of the returning optical beam L3, while the black portions represent the low intensity; the same holds for Figs. 11 to 13.

This means that part of the reading optical beam L2d was reflected by the recording mark RM and the reflection was received by the photodetector 15 as the returning optical beam L3. Accordingly, one can say that the presence of the recording mark RM at the Sample 1's target position was confirmed by the emission of the recording optical beam Lc2.

On the other hand, the reading optical beam L2d was similarly emitted by the optical information recording and reproducing device 5 to the target position which had not been exposed to the recording optical beam Lc2. In this case, the photodetector 15 could hardly detect the returning optical beam L3, as shown in Fig. 10(B).

Similarly, the optical information recording and reproducing device 5 emitted the recording optical beam Lc2 with the wavelength of 405 [nm] and optical power of 20 [mW] to the Sample 2's target position via the objective lens 13 whose numerical aperture NA is 0.35 for 1 [sec]. After that, the optical information recording and reproducing device 5 emitted the reading optical beam L2d with the same wavelength and the optical power of 1.0 [mW] to the Sample 2's target position via the objective lens 13 having the same numerical aperture NA.

At this time, as shown in Fig. 11(A), the photodetector 15 could detect the returning optical beam L3 because its intensity was strong enough. On the other hand, when the reading optical beam L2d was similarly emitted to the target position which had not been exposed to the recording optical beam Lc2, the photodetector 15 could hardly detect the returning optical beam L3, as shown in Fig. 11(B).

Moreover, the optical information recording and reproducing device 5 emitted the recording optical beam Lc2 with the wavelength of 406 [nm] and optical power of 20 [mW] to the Sample 3's target position via the objective lens 13 whose numerical aperture NA is 0.35 for 10.0 [sec]. After that, the optical information recording and reproducing device 5 emitted the reading optical beam L2d with the same wavelength and the optical power of 1.0 [mW] to the Sample 3's target position via the objective lens 13 having the same numerical aperture NA.

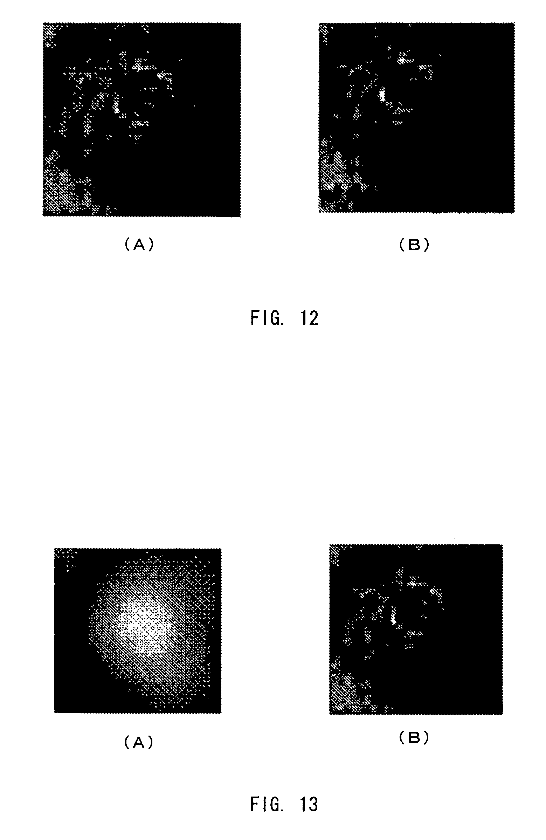

At this time, as shown in Fig. 12(A), the photodetector 15 could hardly detect the returning optical beam L3. Similarly, when the reading optical beam L2d was emitted to the target position which had not been exposed to the recording optical beam Lc2, the photodetector 15 could hardly detect the returning optical beam L3, as shown in Fig. 12(B).

Here, as shown in Table 1, the monomers and photoinitiators of Samples 1, 2 and 3, used as the fluid material M1, are different: while using the same photoinitiator Irt-784, Samples 1 and 2 use different ultraviolet curable monomers; Sample 3 uses a thermosetting monomer and a curing agent for thermosetting.

Accordingly, in the case of Samples 1 and 2 for which the ultraviolet curable monomers and the photoinitiator are used with the recording layer 101 containing photoinitiator residues, the recording mark RM was formed. In the case of Sample 3 for which the thermosetting resin is used with the recording layer 101 not containing photoinitiator residues, the recording mark RM was not formed even after the emission of the recording optical beam L2c.

Moreover, the fact that the recording mark RM was formed by the emission of the recording optical beam L2c on Samples 1 and 2 which both use the same photoinitiator but contain different monomers suggests that the formation of the recording mark may be largely attributable to the photoinitiator, not the monomers.

Incidentally, it is known that the photoinitiator (Irg-784) used in Samples 1 and 2 can be excited by the absorption of light whose wavelength is between those of ultraviolet and visible light (1 [nm] to 550 [nm]), generating radical which works as a starter of photopolymerization; the photoinitiator therefore has the characteristic that it absorbs ultraviolet beams.

The wavelength of the recording optical beam L2c is 406 [nm]: it is visible light, the recording optical beam L2c is close to ultraviolet light. Therefore, it is considered that Irg-784 heats up by absorbing the recording optical beam L2c inside the recording layer 101, exceeds its vaporization temperature, and eventually vaporizes.

In many cases, a photopolymer contains a lot of double bonds thanks to its structure. Generally, it is known that the double bond absorbs ultraviolet light. That is, it is considered that the photopolymers heat up by absorbing the recording optical beam L2c, and convey this heat to the photoinitiators; as a result, the photoinitiators heat up, and therefore vaporize.

Moreover, the optical information recording and reproducing device 5 emitted the recording optical beam Lc2 with the wavelength of 406 [nm] and optical power of 55 [mW] to the Sample 4's target position via the objective lens 13 whose numerical aperture NA is 0.3 for 0.6 [sec]. After that, the optical information recording and reproducing device 5 emitted the reading optical beam L2d with the same wavelength and the optical power of 1.0 [mW] to the Sample 4's target position via the objective lens 13 having the same numerical aperture NA.

At this time, as shown in Fig. 13(A), the photodetector 15 could detect the returning optical beam L3 because its intensity was strong enough. This intensity was regarded as a reference intensity, and other Samples 5 to 20 were checked as to whether the returning optical beam L3 was detected or not, hereinafter.

On the other hand, when the reading optical beam L2d was similarly emitted to the target position which had not been exposed to the recording optical beam L2c, the photodetector 15 could hardly detect the returning optical beam L3, as shown in Fig. 13(B).

Moreover, the optical information recording and reproducing device 5 emitted the recording optical beam L2c to Samples 5 to 7 under the same emission condition as that of Sample 3. Furthermore, the optical information recording and reproducing device 5 emitted the recording optical beam L2c to Samples 8 to 20 under the same emission condition as that of Sample 3, except that the wavelength of the recording optical beam L2c was 405 [nm].

In this case, the optical information recording and reproducing device 5 emitted recording optical beams L2c to a plurality of the target positions, respectively, with increasing the emission time by 0.05-[sec] intervals within the range of 0.05 to 10.0 [sec].

And the optical information recording and reproducing device 5 emitted the reading optical beam L2d to the target position, and detected the intensity of the returning optical beam L3 by the photodetector 15. Of the emission-time periods of the recording light beams L2c whose intensity which was greater than or equal to the reference intensity was detected by the photodetector 15, the shortest emission-time period was regarded as a recording time.

Table 5 shows the recording times of Samples 5 to 7 and 8 to 20, the types of photoinitiators for each Sample, the vaporization temperatures, and the blending ratios. Incidentally, mark "×" means that the photodetector 15 did not detect the returning optical beam L3 whose intensity is greater than or equal to the reference intensity even after the reading optical beam L2d was emitted to the target position which had been exposed to the recording optical beam L2c for 10 [sec].

**Table 5**

| | Photoinitiator | Vaporization TEMP (deg C) | Ratio (wt%) | Recording Time (sec) |
|---|---|---|---|---|
| Sample 5 | DAROCUR1173 | 147 | 0.8 | 0.6 |
| Sample 6 | Irg-907 | 247 | 0.8 | 0.2 |
| Sample 7 | Irg-184 | 192 | 0.8 | 0.6 |
| Sample 8 | DAROCUR1173 | 147 | 1.0 | 0.45 |
| Sample 9 | Irg-184 | 192 | 1.0 | 0.5 |
| Sample 10 | Irg-784 | 232 | 1.0 | 0.45 |
| Sample 11 | Irg-907 | 247 | 1.0 | 0.3 |
| Sample 12 | Irg-369 | 282 | 1.0 | 0.5 |
| Sample 13 | SCTP | 394 | 1.0 | 0.8 |
| Sample 14 | X-32-24 | 532 | 1.0 | × |
| Sample 15 | UVX4 | >600 | 1.0 | × |
| Sample 16 | DAROCUR1173 | 147 | 2.5 | 0.25 |
| Sample 17 | DAROCUR1173 | 147 | 5.0 | 0.2 |
| Sample 18 | DAROCUR1173 | 147 | 10.0 | 0.05 |
| Sample 19 | DAROCUR1173 | 147 | 20.0 | 0.15 |
| Sample 20 | DAROCUR1173 | 147 | 25.0 | 0.55 |

According to the result of measurement, when Samples 5 to 7 and 8 to 13 whose photoinitiators' vaporization temperatures were between 147 and 394 deg C are used, the returning optical beam L3 whose intensity is greater than or equal to the reference intensity was detected during the recording time of less than 1 [sec] (0.2 to 0.8 [sec]). Accordingly, it was confirmed that the recording mark RM was formed at the target position.

On the other hand, when Samples 14 or 15 whose photoinitiator' vaporization temperatures are 532 deg C and more than 600 deg C were used, the returning optical beam L3 whose intensity is greater than or equal to the reference intensity was not detected by the photodetector 15 even after the reading optical beam L2d was emitted to the target position which had been exposed to the recording optical beam L2c for 10 [sec]. Accordingly, it was confirmed that the recording mark RM was not formed at the target position.

Accordingly, it could be considered that if the photoinitiator used has a low vaporization temperature, the photoinitiator residues heat up and reach or exceed the vaporization temperature around the focal point Fb by emitting of the recording optical beam L2c, and the vaporization of the photoinitiator residues creates the recording mark RM. On the other hand, it could be considered that if the photoinitiator used has a high vaporization temperature, the photoinitiator residues do not vaporize because it does not reach the vaporization temperature, and is therefore unable to create the recording mark RM.

Here, even when Sample 12 whose photoinitiator's vaporization temperature is 394 deg C was used, the formation of the recording mark RM took 0.8 seconds. Accordingly, if the recording optical beam L2c is allowed to be emitted for up to 1 [sec], the recording mark RM can be formed when the vaporization temperature of the photoinitiator used is about 400 deg C or less.

Furthermore, the recording times of Sample 11 and 12, which use the photoinitiators whose vaporization temperatures are 247 and 282 deg C, are shorter than that of Sample 13, which uses the photoinitiator whose vaporization temperature is 394 deg C. Accordingly, the use of a photoinitiator with the vaporization temperature of 300 deg C or less may reduce the recording time.

Moreover, the vaporization of the photoinitiator residues occurs due to the heat generated by the recording optical beam L2c. Accordingly, it is considered that the photoinitiators having lower vaporization temperatures make it easier to form the recording marks RM.

However, according to Fig. 5, even if DAROCUR1173 whose vaporization temperature is 147 deg C is used, an endoergic reaction gradually starts around 90 deg C, which is about 60 deg C below the vaporization temperature. This means that if the sample including DAROCUR1173 is left for a long time under the condition of around 90 deg C, the photoinitiator residues gradually vaporize; no photoinitiator residue may be left before a process of forming the recording mark RM starts. This means that the emission of the recording optical beam L2c may not be able to form the recording mark RM.

Generally, electronic devices, including the optical information recording and reproducing device 5, are supposed to be used under the condition of 80 deg C. Accordingly, to secure the temperature stability of the optical information recording medium 100, it is preferred that the photoinitiator whose vaporization temperature is greater than or equal to 140 deg C (80 deg C + 60 deg C) is used. If the photoinitiator having vaporization temperature 5 more deg C than 140 deg C (i.e. 145 deg C) is used, the temperature stability may further increase.

Accordingly, it is preferred that the vaporization temperature of the photoinitiator that is mixed with the fluid material M1 is between 140 and 400 deg C, more preferably between 145 and 300 deg C.

Moreover, the recording times of Samples 5, 8 and 16 to 20, which uses the same photoinitiator, DAROCURE1173, were 1 [sec] or less, regardless of the amount of the photoinitiator mixed with them (0.8 to 25.0 parts by weight).

However, if the amount of photoinitiator added is less than 0.8 parts by weight, a photopolymerization reaction that occurs during the initialization of the uncured optical information recording medium 100a may not be strong enough. This is not desirable.

Moreover, since the recording time of Sample 16 containing 2.5 parts by weight of the photoinitiator is shorter than that of Sample 8 containing 1.0 part by weight of the photoinitiator, it can be considered that the addition of a predetermined amount of photoinitiator (more than 2.0 parts by weight, for example) is preferable.

Furthermore, since the photoinitiator stops the optical reaction of monomers, the excessive amount of the photoinitiator may lower the degree of photopolymerization of a photopolymer in which the monomers are polymerized by the optical reaction, and its coefficient of elasticity and refractive index. Furthermore, if the excess amount of photoinitiator is added, a large amount of photoinitiator residues may be left inside the recording layer 101, lowering the coefficient of elasticity of the whole recording layer 101.

In reality, Sample 20 containing 25.0 parts by weight of the photoinitiator cannot acquire a sufficient coefficient of elasticity, and the initialized recording layer 101 therefore gets soft.

Accordingly, it is preferred that 0.8 to 20.0 parts by weight of the photoinitiator is added per 100 parts by weight of monomers: the amount of photoinitiator added should preferably be between 2.5 parts by weight and 20.0 parts by weight.

### (3-2) Formation of Recording Mark

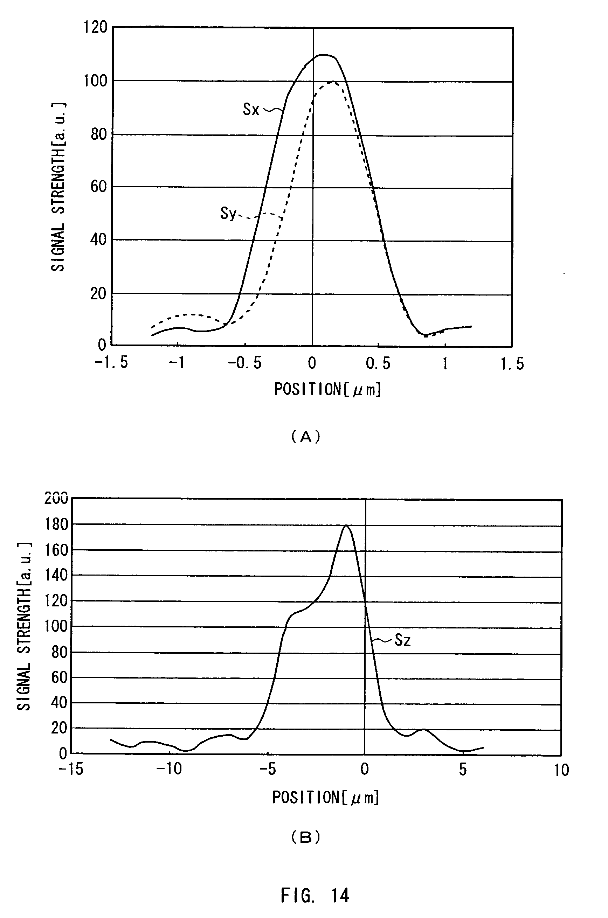

In reality, the light intensity distribution of the returning optical beam L3, which is the reading optical beam L2d reflected by the recording mark RM on Sample 1, was measured in X, Y and Z directions. Figs. 14(A) and (B) show the results. Here, characteristic curves Sx, Sy and Sz represent the distribution of signal strength (or light intensity) detected by the photodetector 15, in the case where the focal point of the reading optical beam L2d is moved in X, Y and Z directions with respect to the target position.

In this case, the optical information recording and reproducing device 5 records the recording mark RM on Sample 1 in the following manner: the target position is positioned 0.1 [mm] away from the boundary between the recording layer 101 and the base plate 102 in Z direction; the NA of the objective lens 13 is 0.35; the wavelength of the recording optical beam L2c is 405 [nm]; the optical power is 20 [mW]; and the recording time is 1.5 [sec]. Moreover, in the optical information recording and reproducing device 5, the wavelength and optical power of the reading optical beam L2d are 405 [nm] and 0.1 [mW], respectively.

According to the distribution characteristics shown in Figs. 14(A) and (B), the recording mark RM has substantially an elliptical shape, with the diameter on an X-Y plane about 1 [µm] and the height related to Z direction about 10 [µm].

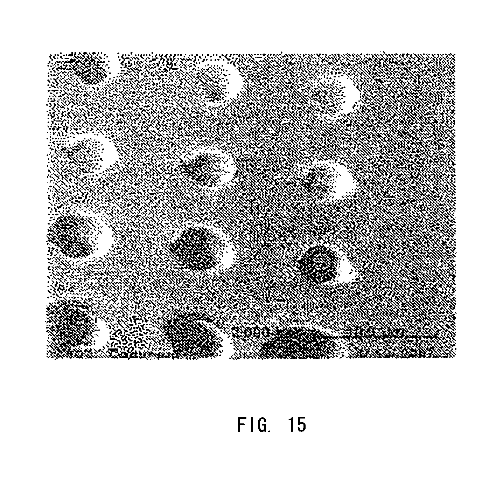

Moreover, Fig. 15 shows a SEM (Scanning Electron Microscopic) photograph depicting the section of Sample 1 on which the recording marks RM are formed. According to the photograph in Fig. 15, the recording mark RM formed is a cavity.

Incidentally, a simulation was conducted under the following condition: the refractive index n₁₀₁ of the recording layer 101 is 1.5; and the refractive index n_{RM} inside the recording mark RM (cavity) is 1.0. According to the result, the photodetector 15 is able to receive the returning optical beam L3 whose light intensity is 0.16 percent of the light intensity of the reading optical beam L2d.

### (3-3) Reproducing of Multilayer Recording

Next, multilayer recording (i.e. stacked volumetric recording) was conducted on Sample 1, with the target position gradually changed in Z direction, and the measurement of the returning optical beam L3 (i.e. a reproduction beam) from each recording mark RM was also conducted.

Specifically, the optical information recording and reproducing device 5 recorded the recording marks on 17 layers by moving the optical pickup 7 in X, Y and Z directions to change the target position inside the recording layer 101 in a three-dimensional way. In this case, the distance between the adjoining recording marks RM on an X-Y plane of each layer (referred to as a mark recording layer, hereinafter) was 3 [µm]; the distance between the adjoining mark recording layers was 22. 5 [µm].

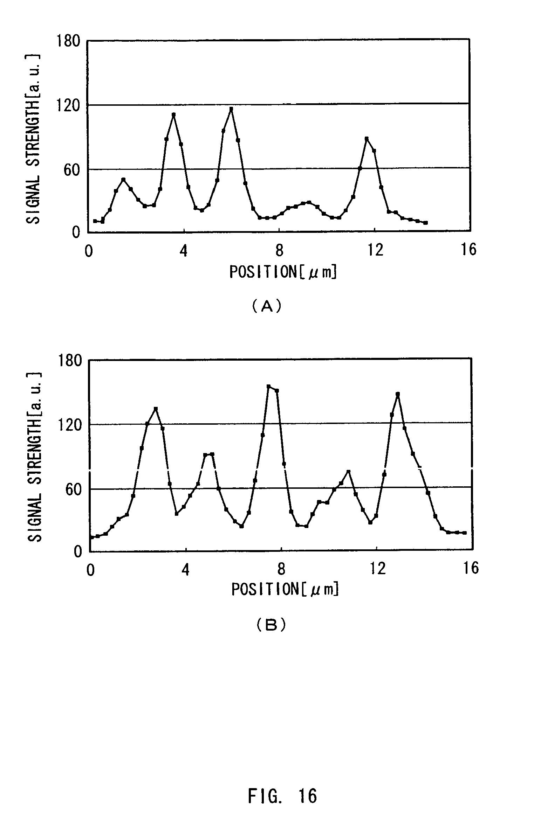

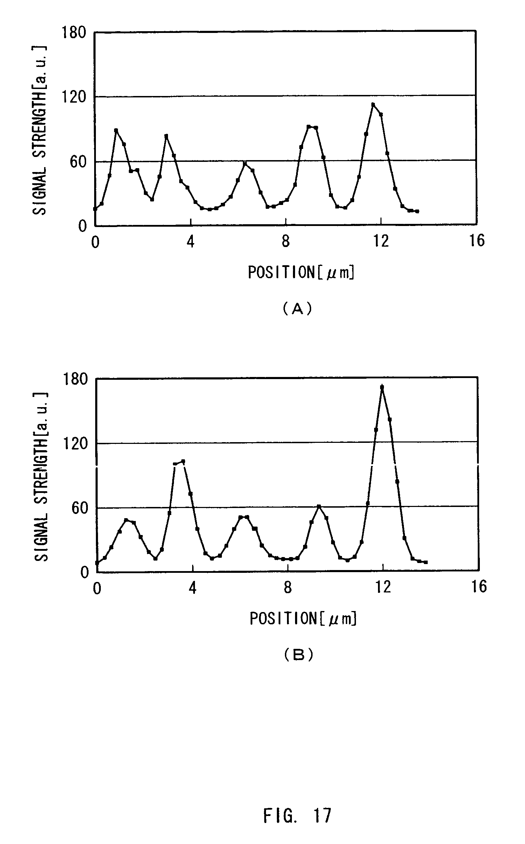

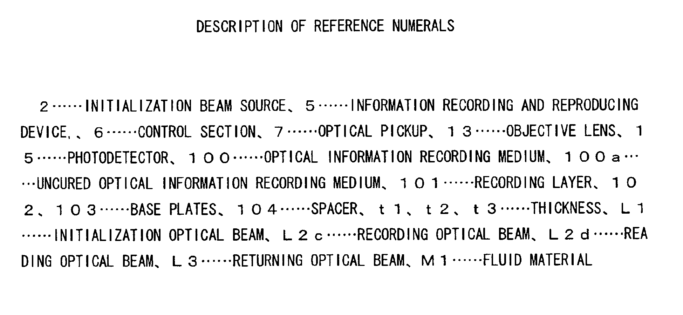

Next, the optical information recording and reproducing device 5 emitted the reading optical beam L2d such that the reading optical beam L2d was focused on each mark recording layer of the optical information recording medium 100. The optical information recording and reproducing device 5 then detected the returning optical beam L3. Figs. 16(A) and (B), and 17(A) and (B) show the detection result of the returning optical beam L3 related to the second layer (from the base plate 102), the fifth layer, the eighth layer and the eleventh layer.

Incidentally, in Figs. 16(A) and (B), and 17(A) and (B), the signal strength is represented in the vertical direction, while the X-direction position is represented in the horizontal direction. They represent the measurement result of signal strength when the focal point of the reading optical beam L2d is moved in X direction on each mark recording layer.

According to Figs. 16(A) and (B), and 17(A) and (B), a difference in signal strength between the point where the recording mark RM is formed and the point where the recording mark RM is not formed (i.e. the initialized area) was huge as for the first to twelfth mark recording layers of the optical information recording medium 100.

Accordingly, if at least 12 mark recording layers are formed by multilayer recording, the optical information recording and reproducing device 5 can detect the recording marks RM formed on each layer by detecting the substantial signal strength of the returning optical beam L3, making it possible to gain good reproduction signals. Thus, the optical information recording and reproducing device 5 can precisely detect the presence of the recording marks RM, or whether a value of "0" or "1" is recorded as information.

Incidentally, Figs. 16 and 17 show the result of receiving the beams under the following conditions: the wavelength of the recording optical beam L2c and reading optical beam L2d used for recording and reproducing of information on the optical information recording medium 100 is 405 [nm]; the optical power of the recording optical beam L2c is 10 [mW] ; the recording time is 2 to 5 [sec]; the optical power of the reading optical beam L2d is 1 [mW]; and the NA of the objective lens 13 is 0.35.

### (4) Operation and Effect

As described above, the recording layer 101 of the optical information recording medium 100 of the present invention contains, as photoinitiator residues, the photoinitiator whose vaporization temperature is greater than or equal to 140 deg C and less than or equal to 400 deg C.

Accordingly, when the recording optical beam L2c, which is a predetermined recording beam, is focused on the recording layer 101 during the process of information recording, the photoinitiator residues around the focal point Fb of the recording optical beam L2c heat up and vaporizes, creating the recording mark RM (cavity).

As a result, when the reading optical beam L2d, which is a predetermined reading beam, is emitted during the process of information reproducing, the returning optical beam L3, which is the reflection from the recording mark RM, is detected, making it possible to recognize the presence of the recording mark RM to reproduce the information from the returning beam.

That is, as for a conventional optical information recording medium that makes use of the characteristics of two-photon absorption regarding a pigment, the following material and component are necessary to form a multilayered medium: a dye material that has a low transmissivity to the reproducing wavelengths but a high transmissivity to wavelengths about twice or more as large as the reproducing wavelengths, and a high-power femtosecond laser that is large and consumes much energy. By contrast, as for the optical information recording medium 100, just focusing an ordinary optical laser beam from a laser diode on the optical information recording medium 100 easily forms the air-bubble recording marks RM, making the optical information recording and reproducing device 5 smaller and energy-efficient.

The recording layer 101 is a photocurable resin: the fluid material M1 containing the monomers including at least a monomer or an oligomer and the photoinitiators gets solidified, due to the optical reaction, such as photopolymerization or photocrosslinking, caused by the emission of the initialization beam L1, to be the ultraviolet curable resin.

Here, the photoinitiator only serves as an initiator to start the polymerization of the fluid material M1 by generating radical and cation. Accordingly, about 0.01 to 0.1 parts by weight of the photoinitiator per 100 parts by weight of the monomers (i.e. the amount of the photoinitiator is about between 0.01 and 0.09 percent of the total weight of the recording layer 101) are theoretically enough to solidify the monomers into photopolymer (if the emission time of the initialization beam L1 is enough (10 hours, for example) without taking into consideration the reaction speed and the like).

As for the fluid material M1, the photoinitiator is excessively added to the monomers. Accordingly, the photoinitiators are left in the recording layer after the solidifying process, and the reaction speed of the optical reaction increases.

Moreover, the recording layer 101 contains the photoinitiator that absorbs an optical beam of a wavelength which is the same as that of the recording optical beam L2c. Therefore, when the recording optical beam L2c is focused, the photoinitiator absorbs the recording optical beam L2c and its temperature rises. In this manner, the photoinitiators residues around the focal point Fb heats up themselves.

Furthermore, a key ingredient of the recording layer 101 is a photopolymer that absorbs an optical beam of a wavelength which is the same as that of the recording optical beam L2c. Therefore, the heat caused by the absorption of the recording optical beam L2c by the photopolymer is conveyed to the photoinitiator residues, leading to an increase in temperature of the photoinitiator residues around the focal point.

Moreover, as for the recording layer 101, before solidifying the fluid material M1, 0.8 to 20 parts by weight of the photoinitiator is added per 100 parts by weight of the monomers. This means that the amount of the photoinitiator added is greater than or equal to 0.79 percent by weight and less than or equal to 16.67 percent by weight with respect to the total weight of the fluid material M1.

Accordingly, the recording layer 101 can keep an enough amount of the photoinitiator residues to form the recording marks RM and prevents problems caused by the lowering of the coefficient of elasticity of the recording layer 101 result from an excessive amount of the photoinitiator, for example, the occurrence of deviation of recording marks RM. As a result, the recording layer 101 can present a good characteristic.

Moreover, as for the recording layer 101, before solidifying the fluid material M1, 2.5 parts by weight of the photoinitiator is added per 100 parts by weight of the monomers. This means that the amount of the photoinitiator added is greater than or equal to 2.44 percent by weight with respect to the total weight of the fluid material M1.

Accordingly, in the fluid material M1, the emission of the initialization optical beam L1 promptly promotes the optical reaction, creating the recording layer 101 that consist primarily of photopolymer having sufficiently high degree of polymerization.

Since the thickness t1 of the recording layer 101 is greater than or equal to 50 [µm], forming a plurality of recording marks RM on layers piled up in a direction of the thickness of the recording layer 101 allows the optical information recording medium 100 to increase its storage capacity. Moreover, since the thickness t1 is less than or equal to 1000 [µm], astigmatism can be restrained in the recording layer 101, making it possible to assuredly form the recording mark RM at the target position.

According to the above configuration, the recording layer 101 of the optical information recording medium 100 contains the photoinitiator whose vaporization temperature is 140 deg C to 400 deg C; when the recording beam L2c is focused, the photoinitiator around the focal point Fb of the recording optical beam L2c heats up and vaporizes, creating an air bubble. After the emission of the recording optical beam L2c ends and the portion around the focal point Fb cools down, an air bubble is left in the recording layer 101 as a cavity. When being irradiated with the reading light beam L2d, this cavity can reflect the reading optical beam L2d, whose reflection is regarded as the returning optical beam L3, due to the difference in refractive index between a portion inside the air bubble and a portion outside the air bubble (or the recording layer 101). Accordingly, as for the recording layer 101, the air bubble serves as the recording mark RM to record information. That is, just emitting the recording optical beam L2c forms the recording marks RM on the optical information recording medium 100. Thus, the optical information recording medium that can record or reproduce information in a stable manner with a simple configuration can be realized.

### (5) Other Embodiments

In the above-noted embodiment, the fluid material M1 includes the monomers and the photoinitiators. However, the present invention is not limited to this. The fluid material M1 may also include a thermosetting monomer, a curing agent which solidifies this monomer, a binder polymer, an oligomer, an initiator for photopolymerization, and the like. In addition, a sensitizing dye can be added when needed. What is essential is to make sure that the recording layer 101 retains the photoinitiator even after the solidifying process.

Incidentally, as binder elements that are added when needed, there are compounds that can be used as a plasticizer: ethylene glycol, glycerin and its derivatives, multiple alcohols, phthalate ester and its derivatives, naphthalenedicarboxylic acid ester and its derivatives, phosphoric acid ester and its derivatives, fatty di-esters and its derivatives. As the photoinitiators that may be used at this time, compounds that can be dissolved appropriately by aftertreatment following the information recording process are desirable. Moreover, as the sensitizing dye, there are cyanine dye, coumarin dye, quinoline dye and the like.

Moreover, in the above-noted embodiment, an excessive amount of the photoinitiator is added so that the recording layer 101 contains the photoinitiator residues. However, the present invention is not limited to this. For example, a different photoinitiator, which is not the one used to solidify the monomers of the recording layer 101, can be added so that the recording layer 101 contains its residues.

Furthermore, in the above-noted embodiment, the amount of the photoinitiator added is greater than or equal to 0.79 percent by weight and less than or equal to 16.67 percent by weight with respect to the total weight of the fluid material M1. However, the present invention is not limited to this. The amount of the photoinitiator added may be determined based on the type of the photoinitiator, the type of the monomers, and the additives.

Furthermore, in the above-noted embodiment, the photoinitiator whose vaporization temperature is greater than or equal to 140 deg C and less than or equal to 400 deg C is added to the recording layer 101. However, the present invention is not limited to this. A chemical compound whose vaporization temperature is greater than or equal to 140 deg C and less than or equal to 400 deg C may be added to the recording layer 101.

Furthermore, in the above-noted embodiment, the recording layer's photoinitiator and photopolymer heats up by absorbing the recording optical beam L2c. However, the present invention is not limited to this. For example, either the photoinitiator or the photopolymer may heat up by absorbing the recording optical beam L2c. Moreover, the recording layer's photopolymer and other compounds (such as additives) added instead of the photoinitiator may heat up due to chemical reactions (such as chemical combination/decomposition reactions triggered by light or heat) caused by the recording optical beam L2c, increasing temperatures around the focal point Fb.

Furthermore, in the above-noted embodiment, during the initialization process (Fig. 2), the collimated initialization beam L1 is emitted to the optical information recording medium 100. However, the present invention is not limited to this. For example, the diverging or converging beam can be emitted to the optical information recording medium 100 as the initialization beam L1.

Furthermore, in the above-noted embodiment, the initialization beam L1, which is used for the initialization process of the optical information recording medium 100, the recording optical beam L2c, which is used to record information on the optical information recording medium 100, and the reading optical beam L2d, which is used to reproduce information from the optical information recording medium 100, have the same wavelength. However, the present invention is not limited to this. For example, while the recording optical beam L2c and the reading optical beam L2d have the same wavelength, the wavelength of the initialization beam L1 may be different from them. Alternatively, the initialization beam L1, the recording optical beam L2c, and the reading optical beam L2d may have different wavelengths.

In this case, it is desirable that: the wavelength of the initialization beam L1 is determined based on the sensitivity of the optical chemical reaction of the photopolymerized photopolymer of the recording layer 101; the wavelength of the recording optical beam L2c is the one that can raise temperatures of materials due to thermal conduction or that is easily absorbed; the wavelength of the reading optical beam L2d is the one that can obtain the highest resolution. At this time, the NA and the like of the objective lens 13 (Fig. 8) are adjusted according to the wavelength of the recording optical beam L2c and the reading optical beam L2d or the like. Furthermore, it may be replaced by two objective lenses that have been optimized for the recording optical beam L2c and the reading optical beam L2d for the information recording and reproducing processes.

Moreover, as for the photopolymerized photopolymer of the recording layer 101, its composition and the like are appropriately adjusted so that it can present a good characteristic given the combination of the initialization beam L1, the recording optical beam L2c, and the reading optical beam L2d regarding their wavelengths.

Furthermore, in the above-noted embodiment, the wavelength of the recording optical beam L2c and the reading optical beam L2d, which are emitted from the recording and reproducing beam source 10, is between 402 and 406 [nm]. Alternatively, they may have other wavelengths, as long as air-bubble recording marks RM can be appropriately formed near the target position inside the recording layer 101.

Furthermore, in the above-noted embodiment, the initialization beam L1, the recording optical beam L2c, and the reading optical beam L2d are emitted toward the base plate 102 of the optical information recording medium 100. However, the present invention is not limited to this. Those beams may be emitted toward either the base plate 102 or 103, or both of them: for example, the initialization beam L1 may be emitted toward the base plate 103.

Furthermore, in the above-noted embodiment, if the thickness t1 (Fig. 2) of the recording layer 101 is about 0.3 [mm], the distance between the adjacent recording marks RM on the mark recording layer is 3 [µm], and the number of the mark recording layers is 11 with the distance between the adjacent mark recording layers about 15 [µm]. However, the present invention is not limited to this. Those figures can be appropriately adjusted according to the thickness t1 of the recording layer 101, the size of the recording mark RM formed inside the recording layer 101, the optical characteristics of the photopolymerized photopolymer, the optical characteristics of the objective lens 13, or the like: for example, the thickness t1 of the recording layer 101 could be about 1.0 [mm], the distance between the adjacent recording marks RM on the mark recording layer could be 5 [µm], and the number of the mark recording layers could be 50 with the distance between the adjacent mark recording layers about 20 [µm].

Furthermore, in the above-noted first embodiment, the optical information recording medium 100 is firmly put on a table 4; by moving the optical pickup 7 in X, Y and Z directions, the recording mark RM is formed at the target position, which is an arbitrary position inside the recording layer 101. However, the present invention is not limited to this. For example, the optical information recording medium 100 may be an optical disc such as CD (Compact Disc) and DVD (Digital Versatile Disc); by rotating the optical disc and, at the same time, moving the optical pickup 7 in X and Z directions, information may be recorded or reproduced. In this case, the tracking control process and the focus control process can be realized after forming a track (such as a groove or a pit) at a boundary between the base plate 102 and the recording layer 101, for example.

Furthermore, in the above-noted embodiment, the recording layer 101 of the optical information recording medium 100 is a discoid disc: one side of the recording layer 101 is about 50 [mm], and the thickness t1 is about 0.05 to 1.0 [mm]. However, the present invention is not limited to this. The dimension may vary. Other shapes with various sizes, including a square, or rectangular shape and a rectangular parallelepiped, can be applied. In this case, it is preferred that the thickness t1 in Z direction is determined based on the transmissivity for the recording optical beam L2c and the reading optical beam L2d, and the like.

Accordingly, the shape of the base plates 102 and 103 may be not limited to a square, or rectangular shape, as long as it corresponds to the shape of the recording layer 101. The material of the base plates 102 and 103 could be polycarbonate or the like instead of glass, as long as they allow the initialization beam L1, the recording optical beam L2c, the reading optical beam L2d, and the returning optical beam L3 to pass therethrough at a high transmissivity rate. Furthermore, if the desired intensity is obtained just from the recording layer 101, the base plates 102 and 103 can be omitted from the optical information recording medium 100.

Furthermore, in the above-noted embodiment, the optical information recording medium 100, which is an optical information recording medium, includes the recording layer 101, which is a recording layer. However, the present invention is not limited to this. The optical information recording medium may include other types of recording layer whose configuration is different from the above.

### Industrial Applicability

The present invention can be applied to an optical disc device and the like: for example, the optical disc device can record or reproduce a large amount of information, such as video and audio content, on or from a recording medium, including an optical disc.

## Claims

1. An optical information recording medium (100) comprising
a recording layer (101) including a photopolymer and a photoinitiator, whose vaporization temperature is greater than or equal to 140 deg C and less than or equal to 400 deg C, wherein the recording layer (101) is adapted, so that when a predetermined recording beam (L2c) is converged on it at a time of recording information, a recording mark which is a cavity is formed by the vaporization of the photoinitiator caused by an increase in temperature around a focal point of the recording beam (L2c), and wherein the recording layer (101) is adapted so as to allow the information to be reproduced based on a returning beam generated after the emission of a predetermined reading beam (L2d) that is emitted for reproducing the information.

2. The optical information recording medium (100) according to claim 1, wherein:
the recording layer (101) is an photocurable resin that has been solidified by the photopolymerization of a fluid material (M1) including at least a monomer or an oligomer, and the photoinitiator; and
the fluid material (M1) is designed to leave the photoinitiator in the solidified recording layer (101) due to an excessive amount of the photoinitiator added to the monomer or oligomer.

3. The optical information recording medium (100) according to claim 1, wherein
in the recording layer (101), the photoinitiator heats up by absorbing the recording beam (L2c), thereby increasing the temperatures around the focal point.

4. The optical information recording medium (100) according to claim 1, wherein
in the recording layer (101), the photoinitiator and the recording layer (101) contain a chemical compound other than the photoinitiator, and the chemical compound heats up by absorbing the recording beam (L2c) , thereby increasing the temperatures around the focal point.

5. The optical information recording medium (100) according to claim 1, wherein
the recording layer (101) contains a chemical compound other than the photoinitiator, and the chemical compound causes a chemical reaction due to the recording beam (L2c) and heats up, thereby increasing the temperatures around the focal point.

6. The optical information recording medium (100) according to claim 1, wherein:
the recording layer (101) is produced by the solidification of a fluid material (M1) including at least a monomer or an oligomer, and the photoinitiator; and
the photoinitiator is added to the fluid material (M1) in the proportion of greater than or equal to 0.79 percent by weight and less than or equal to 16.67 percent by weight with respect to the total weight of the fluid material (M1) .

7. The optical information recording medium (100) according to claim 6, wherein:
the photoinitiator is added to the fluid material (M1) in the proportion of greater than or equal to 2.44 percent by weight with respect to the total weight of the fluid material (M1).

8. The optical information recording medium (100) according to claim 1, wherein:
on the recording layer (101), a plurality of the recording marks can be formed in a direction of the thickness of the recording layer (101).

9. The optical information recording medium (100) according to claim 1, wherein:
the thickness of the recording layer (101) is greater than or equal to 50 [µm] and less than or equal to 1000 [µm].

## Patentansprüche

1. Aufzeichnungsmedium (100) für optische Information, das aufweist
eine Aufzeichnungsschicht (101), die ein Fotopolymer und einen Fotoinitiator enthält, dessen Verdampfungstemperatur größer oder gleich 140 Grad C und kleiner oder gleich 400 Grad C beträgt, wobei die Aufzeichnungsschicht (101) derart gestaltet ist, dass wenn ein vorbestimmter Aufzeichnungsstrahl (L2c) zu einem Zeitpunkt des Aufzeichnens von Information darauf konvergiert wird, eine Aufzeichnungsmarkierung, die ein Hohlraum ist, durch die Verdampfung des Fotoinitiators gebildet wird, verursacht durch einen Anstieg der Temperatur um den Fokuspunkt des Aufzeichnungsstrahls (L2c) herum, und wobei die Aufzeichnungsschicht (101) derart gestaltet ist, dass sie die Wiedergabe der Information basierend auf einem Rücklaufstrahl erlaubt, der nach der Ausstrahlung eines vorbestimmten Lesestrahls (L2d) erzeugt wird, der zum Wiedergeben von Information ausgestrahlt wird.

2. Aufzeichnungsmedium (100) für optische Information gemäß Anspruch 1, wobei:
die Aufzeichnungsschicht (101) ein fotohärtbares Harz ist, das durch die Fotopolymerisation eines flüssigen Materials (M1) verfestigt wurde, welches wenigstens ein Monomer oder ein Oligomer und den Fotoinitiator enthält; und
das flüssige Material (M1) gestaltet ist, um den Fotoinitiator in der verfestigten Aufzeichnungsschicht (101) aufgrund einer übermäßigen Menge des Fotoinitiators, der zu dem Monomer oder Oligomer hinzugefügt ist, zu verlassen.

3. Aufzeichnungsmedium (100) für optische Information gemäß Anspruch 1, wobei
sich in der Aufzeichnungsschicht (101) der Fotoinitiator durch Absorbieren des Aufzeichnungsstrahls (L2c) erhitzt, wodurch die Temperatur um den Fokuspunkt herum erhöht wird.

4. Aufzeichnungsmedium (100) für optische Information gemäß Anspruch 1, wobei
in der Aufzeichnungsschicht (101) der Fotoinitiator und die Aufzeichnungsschicht (101) eine andere chemische Verbindung als den Fotoinitiator enthalten und sich die chemische Verbindung durch Absorbieren des Aufzeichnungsstrahls (L2c) erhitzt, wodurch die Temperatur um den Fokuspunkt herum erhöht wird.

5. Aufzeichnungsmedium (100) für optische Information gemäß Anspruch 1, wobei
die Aufzeichnungsschicht (101) eine andere chemische Verbindung als den Fotoinitiator enthält und die chemische Verbindung eine chemische Reaktion aufgrund des Aufzeichnungsstrahls (L2c) verursacht und sich aufheizt, wodurch die Temperatur um den Fokuspunkt herum erhöht wird.

6. Aufzeichnungsmedium (100) für optische Information gemäß Anspruch 1, wobei
die Aufzeichnungsschicht (101) durch die Verfestigung eines flüssigen Materials (M1) erzeugt wird, das wenigstens ein Monomer oder ein Oligomer und den Fotoinitiator enthält; und
der Fotoinitiator dem flüssigen Material (M1) in dem Verhältnis größer oder gleich 0,79 Prozent des Gewichts und kleiner oder gleich 16,67 Prozent des Gewichts bezüglich dem Gesamtgewicht des flüssigen Materials (M1) hinzugefügt wird.

7. Aufzeichnungsmedium (100) für optische Information gemäß Anspruch 6, wobei
der Fotoinitiator dem flüssigen Material (M1) in dem Verhältnis größer oder gleich 2,44 Prozent des Gewichts bezüglich des Gesamtgewichts des flüssigen Materials (M1) hinzugefügt wird.

8. Aufzeichnungsmedium (100) für optische Information gemäß Anspruch 1, wobei
auf der Aufzeichnungsschicht (101) mehrere der Aufzeichnungsmarkierungen in einer Richtung der Dicke der Aufzeichnungsschicht (101) gebildet werden können.

9. Aufzeichnungsmedium (100) für optische Information gemäß Anspruch 1, wobei
die Dicke der Aufzeichnungsschicht (101) größer als oder gleich 50 [µm] und kleiner oder gleich 1000 [µm] ist.

## Revendications

1. Support d'enregistrement d'informations optique (100) comprenant
une couche d'enregistrement (101) comprenant un photopolymère et un photoinitiateur, dont la température de vaporisation est supérieure ou égale à 140 C° et inférieure ou égale à 400 °C, dans lequel la couche d'enregistrement (101) est conçue de sorte que lorsqu'un faisceau enregistreur prédéfini (L2c) converge sur elle à un moment d'enregistrement d'informations, une marque d'enregistrement qui est une cavité est formée par la vaporisation du photoinitiateur provoquée par une augmentation de la température autour d'un point focal du faisceau enregistreur (L2c), et dans lequel la couche d'enregistrement (101) est conçue de manière à permettre aux informations d'être reproduites sur la base d'un faisceau de retour généré après l'émission d'un faisceau de lecture prédéfini (L2d) qui est émis pour reproduire les informations.

2. Support d'enregistrement d'informations optique (100) selon la revendication 1, dans lequel :
la couche d'enregistrement (101) est une résine photodurcissable qui a été solidifiée par la photopolymérisation d'un matériau fluide (M1) comprenant au moins un monomère ou un oligomère, et le photoinitiateur ; et
le matériau fluide (M1) est conçu pour laisser le photoinitiateur dans la couche d'enregistrement solidifiée (101) en raison d'une quantité excessive du photoinitiateur ajoutée au monomère ou à l'oligomère.

3. Support d'enregistrement d'informations optique (100) selon la revendication 1, dans lequel :
dans la couche d'enregistrement (101), le photoinitiateur chauffe par absorption du faisceau enregistreur (L2c), ce qui permet d'augmenter les températures autour du point focal.

4. Support d'enregistrement d'informations optique (100) selon la revendication 1, dans lequel :
dans la couche d'enregistrement (101), le photoinitiateur et la couche d'enregistrement (101) contiennent un composé chimique autre que le photoinitiateur et le composé chimique chauffe par absorption du faisceau enregistreur (L2c), ce qui permet d'augmenter mes températures autour du point focal.

5. Support d'enregistrement d'informations optique (100) selon la revendication 1, dans lequel :
la couche d'enregistrement (101) contient un composé chimique autre que le photoinitiateur et le composé chimique provoque une réaction chimique en raison du faisceau enregistreur (L2c) et chauffe, ce qui permet d'augmenter mes températures autour du point focal.

6. Support d'enregistrement d'informations optique (100) selon la revendication 1, dans lequel :
la couche d'enregistrement (101) est produite par la solidification d'un matériau fluide (M1) comprenant au moins un monomère ou un oligomère et le photoinitiateur ; et
le photoinitiateur est ajouté au matériau fluide (M1) dans la proportion supérieure ou égale à 0,79 pour cent en poids ou inférieure ou égale à 16,67 pour cent en poids par rapport au poids total du matériau fluide (M1).

7. Support d'enregistrement d'informations optique (100) selon la revendication 6, dans lequel :
le photoinitiateur est ajouté au matériau fluide (M1) dans la proportion supérieure ou égale à 2,44 pour cent en poids par rapport au poids total du matériau fluide (M1).

8. Support d'enregistrement d'informations optique (100) selon la revendication 1, dans lequel :
sur la couche d'enregistrement (101), plusieurs marques d'enregistrement peuvent être formées dans une direction de l'épaisseur de la couche d'enregistrement (101).

9. Support d'enregistrement d'informations optique (100) selon la revendication 1, dans lequel :
l'épaisseur de la couche d'enregistrement (101) est supérieure ou égale à 50 [µm] et inférieure ou égale à 1000 [µm].
